# EUROPEAN PATENT SPECIFICATION

(11) **EP 2 712 259 B1**
(45) Date of publication and mention of the grant of the patent: **22.07.2020**
(21) Application number: 12785079.0
(22) Date of filing: 14.03.2012
(51) Int. Cl.: H04W 74/08, H04W 74/04, H04W 72/04, H04L 5/00

(54) **TRANSMISSION METHOD AND SYSTEM OF PHYSICAL RANDOM ACCESS CHANNEL**
ÜBERTRAGUNGSVERFAHREN UND -SYSTEM FÜR EINEN PHYSIKALISCHEN DIREKTZUGRIFFSKANAL
PROCÉDÉ ET SYSTÈME DE TRANSMISSION DE CANAL PHYSIQUE D'ACCÈS ALÉATOIRE

(30) Priority: 18.05.2011 CN 201110129255
(43) Date of publication of application: 26.03.2014
(73) Proprietor: ZTE Corporation, Shenzhen, Guangdong 518057 (CN)
(72) Inventor: WU, Xin, Shenzhen, Guangdong 518057 (CN); DAI, Bo, Shenzhen, Guangdong 518057 (CN); YU, Bin, Shenzhen, Guangdong 518057 (CN)
(74) Representative: Lavoix
(86) International application number: PCT/CN2012/072333
(87) International publication number: WO 2012/155626

(56) References cited:
- EP-A2- 2 302 830
- WO-A1-2010/126418
- WO-A1-2012/146825
- CN-A- 101 400 150
- CN-A- 101 835 273
- CN-A- 102 036 411
- CN-A- 102 036 411
- CN-A- 102 202 415
- ETSI: "LTE; Evolved Universal Terrestrial Radio Access (E-UTRA) and Evolved Universal Terrestrial Radio Access Network (E-UTRAN); Overall description; Stage 2 (3GPP TS 36.300 version 10.3.0 Release 10)", (3GPP TS 36.300 VERSION 10.3.0 RELEASE 10), 1 March 2011 (2011-03-01), XP055135753,
- ZTE: "Initial Uplink Access Procedure in LTE-Advanced", 3GPP DRAFT; R1-090984 INITIAL UPLINK ACCESS PROCEDURE IN LTE-ADVANCED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090205, 5 February 2009 (2009-02-05), XP050318814, [retrieved on 2009-02-05]
- INTERDIGITAL COMMUNICATIONS: "Support for RACH on SCells in LTE CA", 3GPP DRAFT; R2-113258 (REL-11 RACH ON SCELLS LTE CA), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), XP050495410, [retrieved on 2011-05-03]

## Description

### TECHNICAL FIELD

The disclosure relates to the field of mobile communications, in particular to a method and system for transmitting a Physical Random Access Channel (PRACH).

### BACKGROUND

A Radio Frame (RF) in a Long Term Evolution (LTE) system has a frame structure in a Frequency Division Duplex (FDD) mode and a frame structure in a Time Division Duplex (TDD) mode.

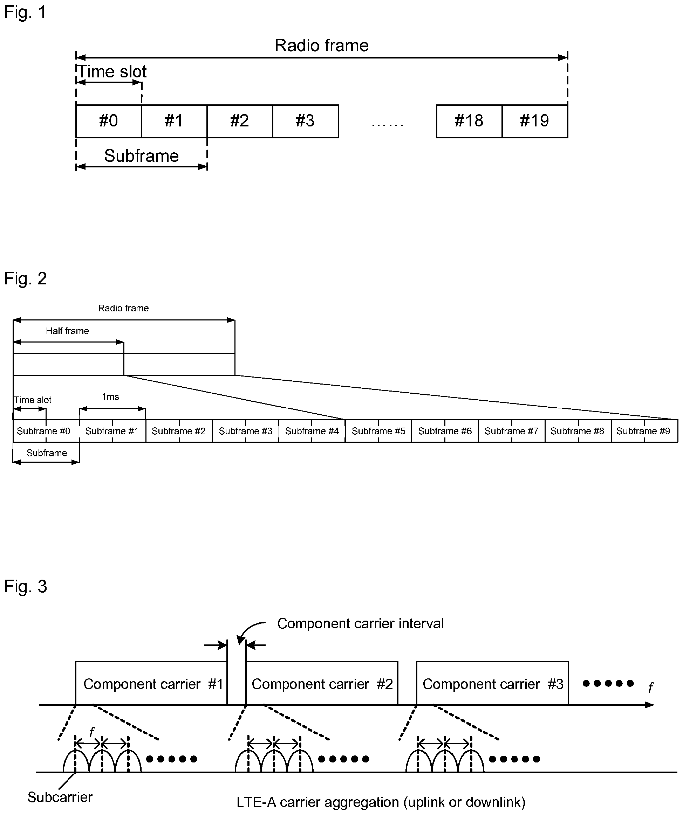

As shown in Fig. 1, Fig. 1 is a schematic diagram showing a frame structure in the FDD mode in the related art, and a RF of 10ms consists of twenty slots which are 0.5ms long each and numbered from 0 to 19 respectively. Slot 2i and slot (2i+1) compose subframe i which is 1ms long.

As shown in Fig. 2, Fig. 2 is a schematic diagram showing a frame structure in the TDD mode in the related art, and a RF of 10ms consists of two half frames which are 5ms long each. A half frame includes five subframes which are 1ms long each. subframe i is defined as slot 2i and slot (2i+1) which are 0.5ms long each.

In the aforementioned two frame structures, for a normal Cyclic Prefix (CP), a slot contains seven symbols of 66.7 microseconds (µs), in which the CP length of the first symbol is 5.21µs, and the CP length of the other six symbols is 4.69µs; and for an extended CP, a slot contains six symbols, in which the CP length of all the symbols is 16.67µs.

Random access is an access process before a User Equipment (UE) starts to communicate with a network. The random access can be divided into two types: synchronous random access and non-synchronous random access. When the UE has been in uplink synchronization with a system, the random access process of the UE is referred to as the synchronous random access; and when the UE has not been in or has been out of uplink synchronization with a system, the random access process of the UE is referred to as the non-synchronous random access.

For a PRACH in an LTE system, which may also be referred to as a random access opportunity or random access resource, one random access channel corresponds to one random access preamble which consists of a CP and a sequence. And, different random access preamble formats mean different lengths of the CP and/or the sequence. At present, the types of preamble formats supported by the TDD mode in the LTE system are shown in Table 1 below:

**Table 1**

| Preamble format | *T*_{CP} | *T*_{SEQ} |
|---|---|---|
| 0 | 3168.*T* ₛ | 24576·*T* ₛ |
| 1 | 21024·*T* ₛ | 24576·*T* ₛ |
| 2 | 6240·*T* ₛ | 2·24576·*T* ₛ |
| 3 | 21024·*T* ₛ | 2·24576·*T* ₛ |
| 4 (only for the frame structure in the TDD mode) | 448·*T* ₛ | 4096·*T* ₛ |

In Table 1, *T*_{CP} represents the length of the CP, *T*_{SEQ} represents the length of the sequence, and *T*_{S}=1/(15000x2048)s. In the random access preamble formats shown in Table 1, the preamble formats 0-3 are transmitted in a common uplink subframe but the preamble format 4 is transmitted in an Uplink Pilot Time Slot (UpPTS). The transmission modes are specifically as follows: the preamble format 0 is transmitted in one common uplink subframe; the preamble formats 1 and 2 are transmitted in two common uplink subframes; the preamble format 3 are transmitted in three common uplink subframes; and the preamble format 4 is transmitted in an UpPTS.

In frequency domain, a bandwidth occupied by one random access preamble corresponds to six Resource Blocks (RBs), i.e., seventy-two Resource Elements (REs), and the bandwidth of each RE is 15kHz. PRACHs in the same time domain are distinguished through the frequency domain.

Three kinds of downlink physical control channels are defined in the LTE: a Physical downlink Control Format Indicator Channel (PCFICH), a Physical Hybrid Automatic Retransmission Request Indicator Channel (PHICH) and a Physical Downlink Control Channel (PDCCH).

The PDCCH is used for bearing Downlink Control Information (DCI), including: uplink and downlink scheduling information, and uplink power control information. The format of DCI (DCI format) includes: DCI format 0, DCI format 1, DCI format 1A, DCI format 1B, DCI format 1C, DCI format 1D, DCI format 2, DCI format 2A, DCI format 3, DCI format 3A and the like.

The DCI format 0 is used for indicating scheduling of a Physical Uplink Shared Channel (PUSCH).

The DCI format 1, the DCI format 1A, the DCI format 1B, the DCI format 1C and the DCI format 1D are used for different modes of codeword scheduling of a Physical Downlink Shared Channel (PDSCH).

The DCI format 2, the DCI format 2A and the DCI format 2B are used for different modes of space division multiplexing.

The DCI format 3 and the DCI format 3A are used for different modes of power control instructions of a Physical Uplink Control Channel (PUCCH) and a PUSCH.

Physical resources transmitted by the PDCCH are in a unit of Control Channel Element (CCE) and one CCE consists of nine Resource Element Groups (REGs), i.e., thirty-six REs; and one PDCCH may occupy one CCE, or two CCEs, or four CCEs, or eight CCEs. The four kinds of PDCCHs occupying one CCE, two CCEs, four CCEs and eight CCEs are in tree-like aggregation, namely, the PDCCH occupying one CCE can start from any CCE, the PDCCH occupying two CCEs starts from a CCE with a position of an even number, the PDCCH occupying four CCEs starts from a CCE with a position of an integral multiple of four, and the PDCCH occupying eight CCEs starts from a CCE with a position of an integral multiple of eight.

Each aggregation level defines a search space, which includes a common one and a UE-specific one. The number of CCEs in the whole search space is determined by the number of Orthogonal Frequency Division Multiplexing (OFDM) symbols occupied by a control area indicated by a PCFICH in each downlink subframe and the group number of PHICHs. A UE blindly detects all possible PDCCH code rates in a DCI format of a transmission mode in a search space.

In a non-competitive random access process, a base station transmits a preamble index, a PRACH mask index and other information in the DCI format 1A. If a UE is arranged by a high layer to decode a PDCCH through Cyclical Redundancy Check (CRC) scrambled with a Random Access Radio Network Temporary Identifier (RA-RNTI), then the UE should decode the PDCCH and all related PDSCHs according to corresponding combinations defined in Table 2 below:

**Table 2**

| DCI format | Search space | PDSCH transmission scheme corresponding to a PDCCH |
|---|---|---|
| DCI format 1A | Common | If there is one Physical Broadcast Channel (PBCH) antenna port, a single antenna port, i.e., port 0, is used; otherwise, transmit diversity |
| DCI format 1 | Common | If there is one PBCH antenna port, a single antenna port, i.e., port 0, is used; otherwise, transmit diversity |

If a UE is arranged by a high layer to decode a PDCCH through CRC scrambled with a Cell Radio Network Temporary Identifier (C-RNTI), then the UE should decode the PDCCH and all related PDSCHs according to corresponding combinations defined in Table 3 below:

**Table 3**

| UE downlink transmission mode | DCI format | Search space | PDSCH transmission scheme corresponding to a PDCCH |
|---|---|---|---|
| Mode 1 | DCI format 1A | Common and UE specific defined by a C-RNTI | Single antenna port, port 0 |
| | DCI format 1 | UE specific defined by a C-RNTI | Single antenna port, port 0 |
| Mode 2 | DCI format 1A | Common and UE specific defined by a C-RNTI | Transmit diversity |
| | DCI format 1 | UE specific defined by a C-RNTI | Transmit diversity |
| Mode 3 | DCI format 1A | Common and UE specific defined by a C-RNTI | Transmit diversity |
| | DCI format 2A | UE specific defined by a C-RNTI | Open-loop space multiplexing or transmit diversity |
| Mode 4 | DCI format 1A | Common and UE specific defined by a C-RNTI | Transmit diversity |
| | DCI format 2 | UE specific defined by a C-RNTI | Closed-loop space multiplexing or transmit diversity |
| Mode 5 | DCI format 1A | Common and UE specific defined by a C-RNTI | Transmit diversity |
| | DCI format 1D | UE specific defined by a C-RNTI | Multi-user multi-input multi-output |
| Mode 6 | DCI format 1A | Common and UE specific defined by a C-RNTI | Transmit diversity |
| | DCI format 1B | UE specific defined by a C-RNTI | Closed-loop Rank=1 precoding |
| Mode 7 | DCI format 1A | Common and UE specific defined by a C-RNTI | If there is one PBCH antenna port, a single antenna port, i.e., port 0, is used; otherwise, transmit diversity |
| | DCI format 1 | UE specific defined by a C-RNTI | Single antenna port, port 5 |
| Mode 8 | DCI format 1A | Common and UE specific defined by a C-RNTI | If there is one PBCH antenna port, a single antenna port, i.e., port 0, is used; otherwise, transmit diversity |
| | DCI format 2B | UE specific defined by a C-RNTI | Dual-layer transmission, port 7 and port 8; or single antenna port, port 7 or port 8 |
| Mode 9 | DCI format 1A | Common and UE specific defined by a C-RNTI | If there is one PBCH antenna port, a single antenna port, i.e., port 0, is used; otherwise, transmit diversity |
| | DCI format 2C | UE specific defined by a C-RNTI | Up to 8 layer transmission, port 7-port 14 |

In an LTE-Advanced (LTE-A) system, since an LTE-A network needs to be able to access an LTE user, the operation frequency band of the LTE-A network needs to cover the current LTE frequency band. However, no allocable continuous 100MHz spectrum bandwidth exits in the current LTE frequency band now, therefore a technical problem to be solved by the LTE-Advanced is to aggregate several continuous component carriers (spectrums) distributed in different frequency bands through Carrier Aggregation (CA) technology to form a 100MHz bandwidth available for the LTE-Advanced. That is, the aggregated spectrum is divided into n component carriers (spectrums) and the spectrum in each of the n component carrier (spectrums) is continuous. A schematic diagram showing carrier aggregation in an LTE-A system is as shown in Fig. 3.

In the related art, in a CA scenario, if multiple component carriers are aggregated, it is necessary to define one of the component carriers as a Primary Component Carrier (PCC) and to define the remaining component carriers as Secondary Component Carriers (SCCs). In addition, the component carriers can also be referred to as serving cells, the primary component carrier is referred to as a Primary Serving Cell (Pcell), and the secondary component carriers are referred to as Secondary Serving Cells (Scells).

Since distributed transmission nodes and repeaters are utilized in multiple scenarios, a PRACH needs to be transmitted in an Scell to acquire dedicated timing of the Scell. Therefore, how to transmit a PRACH in an Scell and a series of technical improvements related thereto will be a problem to be solved.

The document "Support for RACH on SCells in LTE CA, R2-113258" discloses a random access procedure (RACH) for Scells, which is used by the UE to gain initial timing alignment by triggering a RACH procedure cross-scheduled from another serving cell or from a Scell.

### SUMMARY

The invention is defined by the claims. In view of this, the disclosure is intended to provide a method and system for transmitting a PRACH, in order to solve the problem of transmitting the PRACH in an Scell in a CA scenario.

To this end, a technical solution of the disclosure is implemented as follows.

The disclosure provides a method for transmitting a PRACH, which includes:
in a CA scenario, a base station transmits, in a Pcell or an Scell, a random access trigger message to a UE;
the UE transmits, in the Scell, a PRACH; and
the base station transmits, in the Pcell or an Scell, a random access procedure message 2 to the UE; and
when the base station transmits, in the Pcell, the random access procedure message 2 to the UE, detecting, in both the Pcell and the Scell, by the UE, downlink control information in a common search space within one subframe; or
when the base station transmits, in the Scell, the random access procedure message 2 to the UE, detecting in both the Pcell and the Scell, by the UE, downlink control information in a common search space within one subframe;
wherein the process that a base station transmits, in a Pcell, a random access trigger message to a UE may include:
   the base station transmits the random access trigger message to the UE through downlink control channel information of the Pcell, wherein the downlink control channel information includes an index of an uplink serving cell in which the PRACH is located.

The index of the uplink serving cell in which the PRACH is located may be located in:
a Carrier Indicator Field, CIF, added in the downlink control channel information; or
downlink control signaling in the downlink control channel information.

The process that the UE transmits, in the Scell, a PRACH may include:
the UE transmits, in a serving cell indicated by the index of the uplink serving cell in which the PRACH is located, the PRACH.

The process that a base station transmits, in an Scell, a random access trigger message to a UE may include:
the base station transmits the random access trigger message to the UE through the downlink control channel information of the Scell.

The process that the UE transmits, in the Scell, a PRACH may include:
the UE transmits, in an uplink serving cell indicated by SIB System Information Block X of the downlink Scell in which the random access trigger message is received, the PRACH.

The method may further include: after the base station transmits, in the Pcell or the Scell, the random access procedure message 2 to the UE,
the UE transmits, in the Scell in which the PRACH is transmitted, the random access procedure message 3 to the base station;
wherein the random access procedure message 3 is a feedback message of the random access procedure message 2.

The disclosure further provides a system according to claim 7.

The index of the uplink serving cell in which the PRACH is located may be located in:
a CIF added in the downlink control channel information; or
downlink control signaling in the downlink control channel information.

The UE may be further configured to transmit, in a serving cell indicated by the index of the uplink serving cell in which the PRACH is located, the PRACH.

The base station may be further configured to transmit the random access trigger message to the UE through the downlink control channel information of the Scell.

The UE may be further configured to transmit, in an uplink serving cell indicated by SIB X of the downlink Scell in which the random access trigger message is received, the PRACH.

The UE may be further configured to transmit, in the Scell in which the PRACH is transmitted, the random access procedure message 3 to the base station;
wherein the random access procedure message 3 is a feedback message of the random access procedure message 2.

According to the method and system for transmitting a PRACH provided by the disclosure, in a CA scenario, a base station transmits, in a Pcell or an Scell, a random access trigger message to a UE; the UE transmits, in the Scell, a PRACH; and the base station transmits, in the Pcell or an Scell, a random access procedure message to the UE. With the disclosure, a PRACH can be transmitted in an Scell in a CA scenario.

### BRIEF DESCRIPTION OF THE DRAWINGS

Fig. 1 is a schematic diagram showing a frame structure in the FDD mode in the related art;
Fig. 2 is a schematic diagram showing a frame structure in the TDD mode in the related art;
Fig. 3 is a schematic diagram showing carrier aggregation of an LTE-A system in the related art; and
Fig. 4 is a flowchart of a method for transmitting a PRACH according to the disclosure.

### DETAILED DESCRIPTION

The technical solution of the disclosure is further elaborated below with reference to the drawings and specific embodiments.

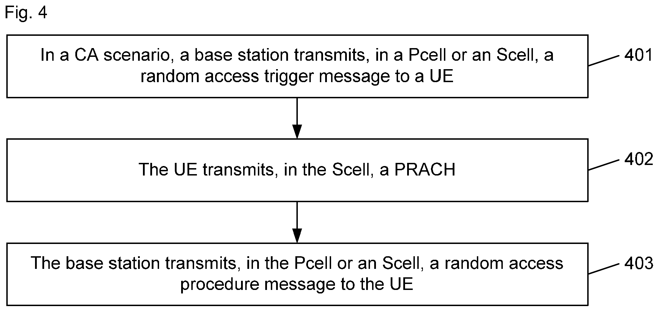

As shown in Fig. 4, a method for transmitting a PRACH provided by the disclosure mainly includes the following steps:
Step 401: In a CA scenario, a base station transmits, in a Pcell or an Scell, a random access trigger message to a UE.

Here, the process that a base station transmits, in a Pcell, a random access trigger message to a UE specifically includes: the base station transmits the random access trigger message to the UE through high layer signaling or downlink control channel information of the Pcell, wherein the high layer signaling or the downlink control channel information includes an index of an uplink serving cell in which the PRACH is located.

The index of the uplink serving cell in which the PRACH is located may be located in: a Carrier Indicator Field (CIF) added in the downlink control channel information; or downlink control signaling in the downlink control channel information.

The downlink control channel information may further include: a preamble index and a PRACH mask index.

The process that the base station transmits, in the Scell, a random access trigger message to the UE specifically includes: the base station transmits the random access trigger message to the UE through the downlink control channel information of the Scell.

Step 402: The UE transmits, in the Scell, a PRACH.

Corresponding to the process that a base station transmits, in a Pcell, a random access trigger message to a UE in Step 401, the UE can transmit, in a serving cell indicated by the index of the uplink serving cell in which the PRACH is located, the PRACH.

Corresponding to the process that the base station transmits, in the Scell, the random access trigger message to the UE in Step 402, the UE can transmit, in an uplink serving cell indicated by SIB X of the downlink Scell in which the random access trigger message is received, the PRACH, where X have preferably the value of 2.

Step 403: The base station transmits, in the Pcell or the Scell, a random access procedure message (such as a Random Access Response (RAR)) to the UE.

Here, the process that the base station transmits, in the Pcell, a random access procedure message to the UE specifically includes:
the UE detects the downlink control information transmitted by the base station in the Pcell; and
the UE detects the random access procedure message according to the downlink control information and the preamble index corresponding to the transmitted PRACH; or
the UE detects the random access procedure message according to the downlink control information, the preamble index corresponding to the transmitted PRACH and a temporary C-RNTI, wherein the temporary C-RNTI is configured as a C-RNTI; or
the UE detects the random access procedure message according to the downlink control information, the preamble index corresponding to the transmitted PRACH and a configured C-RNTI.

The process that the UE detects, in the Pcell, the downlink control information transmitted by the base station specifically includes:
the UE detects the downlink control information according to a configured RA-RNTI configured for each serving cell, wherein the RA-RNTI configured for each serving cell is different from one another; or
the UE detects the downlink control information according to a RA-RNTI configured for each serving cell, wherein the RA-RNTI configured for each serving cell is same; or
the UE detects the downlink control information according to the configured C-RNTI.

Here, the Scell in which the base station transmits the random access procedure message to the UE can be a downlink serving cell corresponding to the uplink serving cell in which the random access channel is transmitted.

The process that the base station transmits, in the Scell, the random access procedure message to the UE specifically includes:
the UE detects the downlink control information transmitted by the base station; and
the UE detects the random access procedure message in the Scell according to the downlink control information and the preamble index corresponding to the transmitted PRACH; or
the UE detects the random access procedure message in the Scell according to the downlink control information, the preamble index corresponding to the transmitted PRACH and a temporary C-RNTI, wherein the temporary C-RNTI is configured as a C-RNTI; or
the UE detects the random access procedure message in the Scell according to the downlink control information, the preamble index corresponding to the transmitted PRACH and a configured C-RNTI.

The process that the UE detects the downlink control information transmitted by the base station specifically includes:
the UE detects the downlink control information transmitted by the base station in the Scell according to a configured RA-RNTI; or
the UE detects the downlink control information in the Pcell according to a configured RA-RNTI configured for each serving cell, wherein the RA-RNTI configured for each serving cell is different from one another; or
the UE detects the downlink control information in the Pcell according to a RA-RNTI configured for each serving cell, wherein the RA-RNTI configured for each serving cell is same; or
the UE detects the downlink control information in the Pcell according to the configured C-RNTI; or
the UE detects the downlink control information including a CIF in the Pcell according to a RA-RNTI configured for each serving cell, wherein the RA-RNTI configured for each serving cell is same.

The process that the UE detects, in the Scell, the downlink control information transmitted by the base station specifically includes:
the UE detects, in the Scell, the downlink control information in both a common search space and a UE specific search space within one subframe; or
the UE only detects, in the Scell, the downlink control information in a common search space within one subframe, and only detects, in the Scell, the downlink control information in a specific search space within another subframe.

The process that the UE detects, in the Pcell, the downlink control information includes:
the UE detects, in the Pcell, the downlink control information in a common search space within one subframe; or
the UE detects, in both the Pcell and the Scell, the downlink control information in a common search space within one subframe.

Furthermore, after the base station transmits the random access procedure message to the UE in the Pcell or the Scell, the method may further include:
the UE transmits a random access procedure message 3 to the base station in the Pcell or the Scell.

Specifically, the UE can transmit, in the Scell in which the PRACH is transmitted, the random access procedure message 3 to the base station.

It should be further noted the random access procedure message in an embodiment of the disclosure mainly refers to a random access procedure message 2.

The method for transmitting a PRACH is further elaborated below in conjunction with specific embodiments.

### Embodiment 1

In a CA scenario, a base station transmits a random access trigger message to a UE in an Scell through high layer signaling or downlink control channel information to trigger a random access process, wherein the high layer signaling or the downlink control channel information includes an index of an uplink serving cell in which the PRACH is located.

The random access trigger message is also referred to as a random access procedure message 0. The random access process is triggered as follows:
the UE detects, in the Pcell, the downlink control channel information transmitted by the base station to trigger the random access process. The downlink control channel information needs to be configured as one of the followings:
Configuration 1: A CIF is added in the downlink control channel information to indicate a serving cell.

The downlink control channel information that the base station transmits to an Scell is detected by the UE in the Pcell. The CIF is added in the downlink control information to indicate the index of the uplink serving cell in which the PRACH is located, and the CIF is characterized by including n bits, which are used for indicating the serving cell corresponding to the downlink control information, where n has preferably the value of 3.

It should be noted that the UE needs only to detect a UE specific search space when the UE is configured to detect the downlink control information including the CIF.

The downlink control information is born in a DCI format 1A; and when the DCI format 1A is used for a random access process and is initialized in a PDCCH order, the base station will transmit a Preamble Index and a PRACH Mask Index to the UE in the DCI format 1A.

The UE acquires the uplink serving cell triggering the random access process through the detected downlink control information in the DCI format 1A, then the downlink control information includes the value of the CIF, the Preamble Index and the PRACH Mask Index, and the UE transmits a PRACH in the uplink serving cell.

Configuration 2: A serving cell is indicated through a control signaling in the downlink control information.

The downlink control channel information that the base station transmits to an Scell is detected by the UE in the Pcell. The downlink control information is born in a DCI format 1A; and when the DCI format 1A is used for a random access process and is initialized in a PDCCH order, the base station will transmit a Preamble Index and a PRACH Mask Index to the UE in the DCI format 1A.

In the DCI format 1A, n bits are adopted to indicate the index of the uplink serving cell in which the PRACH is located, where n has preferably the value of 3.

The index of the serving cell can be indicated through several states reserved in resource allocation information bits in the DCI format 1A.

The UE acquires the uplink serving cell triggering the random access process through the detected downlink control information in the DCI format 1A, then the downlink control information includes a control signaling for indicating the index of the uplink serving cell, the Preamble Index and the PRACH Mask Index, and the UE transmits a PRACH in the uplink serving cell.

The PRACH is also referred to as a physical random access message 1.

After the UE transmits the PRACH, the base station transmits a random access procedure message to the UE through high layer signaling or downlink control channel information. The random access procedure message is referred to as a message N (Message N), where N is a positive integer, and is preferably 2, 4 or 5.

The UE detects, in the Pcell, downlink control channel information that the base station transmits to the UE, wherein the downlink control channel information is used for indicating the Message N. The specific detection process can adopt the following methods:
Method 1: One RA-RNTI is configured for each serving cell, and in the Pcell, the UE should decode the PDCCH and all related PDSCHs according to the corresponding combination defined in Table 2 when the UE is configured by a high layer to decode the PDCCH through the CRC scrambled with the RA-RNTI.
   The UE detects the Message N according to the configured RA-RNTI and the preamble index corresponding to the transmitted PRACH. Here, the RA-RNTI configured for each serving cell is different.
Method 2: The UE should decode the PDCCH and all related PDSCHs according to the corresponding combination defined in Table 2 in the Pcell according to the configured RA-RNTI when the UE is configured by a high layer to decode the PDCCH through the CRC scrambled with the RA-RNTI. Here, the RA-RNTI configured for each serving cell is same.
Method 3: The UE detects the downlink control information according to the configured C-RNTI rather than a RA-RNTI.

After the downlink control information is detected by the UE in the Pcell, the UE detects the random access procedure message (i.e., Message N) according to the downlink control information and the preamble index corresponding to the transmitted PRACH; or
the UE detects the random access procedure message according to the downlink control information, the preamble index corresponding to the transmitted PRACH and a temporary C-RNTI, wherein the temporary C-RNTI is configured as a C-RNTI; or
the UE detects the random access procedure message according to the downlink control information, the preamble index corresponding to the transmitted PRACH and the configured C-RNTI.

In addition, the base station can further transmit the downlink control channel information, which is used for transmitting the Preamble Index and the PRACH Mask Index, to the UE, and also transmit high layer signaling to transmit the Message N to the UE.

### Embodiment 2

In a CA scenario, a base station transmits a random access trigger message to a UE in an Scell through high layer signaling or downlink control channel information to trigger a random access process, wherein the high layer signaling or the downlink control channel information includes an index of an uplink serving cell in which the PRACH is located.

The random access trigger message is also referred to as a random access procedure message 0.

The random access process is triggered as follows:
the UE detects, in the Pcell, the downlink control channel information transmitted by the base station to trigger the random access process. The downlink control channel information needs to be configured as one of the followings:
Configuration 1: A CIF is added in the downlink control channel information to indicate a serving cell.

The downlink control channel information that the base station transmits to an Scell is detected by the UE in the Pcell. The CIF is added in the downlink control information to indicate the index of the uplink serving cell in which the PRACH is located, and the CIF is characterized by including n bits, which are used for indicating the serving cell corresponding to the downlink control information, where n has preferably the value of 3.

It should be noted that the UE needs only to detect a UE specific search space when the UE is configured to detect the downlink control information including the CIF.

The downlink control information is born in a DCI format 1A; and when the DCI format 1A is used for a random access process and is initialized in a PDCCH order, the base station will transmit a Preamble Index and a PRACH Mask Index to the UE in the DCI format 1A.

The UE acquires the uplink serving cell triggering the random access process through the detected downlink control information in the DCI format 1A, then the downlink control information includes the value of the CIF, the Preamble Index and the PRACH Mask Index, and the UE transmits a PRACH in the uplink serving cell.

Configuration 2: A serving cell is indicated through a control signaling in the downlink control information.

The downlink control channel information that the base station transmits to an Scell is detected by the UE in the Pcell. The downlink control information is born in a DCI format 1A; and when the DCI format 1A is used for a random access process and is initialized in a PDCCH order, the base station will transmit a Preamble Index and a PRACH Mask Index to the UE in the DCI format 1A.

In the DCI format 1A, n bits are adopted to indicate the index of the uplink serving cell in which the PRACH is located, where n has preferably the value of 3.

The index of the serving cell can be indicated through several states reserved in resource allocation information bits in the DCI format 1A. The UE acquires the uplink serving cell triggering the random access process through the detected downlink control information in the DCI format 1A, then the downlink control information includes a control signaling for indicating the index of the uplink serving cell, the Preamble Index and the PRACH Mask Index, and the UE transmits a PRACH in the uplink serving cell.

The PRACH is also referred to as a physical random access message 1.

After the UE transmits the PRACH, the base station transmits a random access procedure message to the UE through high layer signaling or downlink control channel information. The random access procedure message is referred to as a message N (Message N), where N is a positive integer, and is preferably 2, 4 or 5. The Scell is a downlink serving cell corresponding to the uplink serving cell in which the random access channel is transmitted.

The UE detects, in the Pcell, the downlink control channel information that the base station transmits to the UE, wherein the downlink control channel information is used for indicating the Message N. The specific detection process can adopt the following methods:
Method 1: The UE should decode the PDCCH and all related PDSCHs according to the corresponding combination defined in Table 2 on the Scell according to a configured RA-RNTI when being arranged by a high layer to decode the PDCCH through the CRC scrambled with the RA-RNTI. Here, the RA-RNTI configured for each serving cell is same. Specifically:
Configuration 1: Within a certain subframe, the UE detects, in the Scell, the downlink control information in both a common search space and a UE specific search space .

In the Scell, the UE detects a DCI format 1A or DCI format 1C in the common search space to receive a Message N transmitted by the base station, and detects the corresponding DCI format in the UE specific search space at the same time to receive scheduling information used for indicating other downlink data.

Correspondingly, the UE should decode the PDCCH and all related PDSCHs according to the corresponding combination defined in Table 2 when the UE is configured by a high layer to decode the PDCCH through the CRC scrambled with a RA-RNTI. Meanwhile, the UE will decode the PDCCH and all related PDSCHs according to the corresponding combination defined in Table 3 when the UE is also configured by a high layer to decode the PDCCH through the CRC scrambled with a C-RNTI.

Configuration 2: Within a certain subframe, the UE only detects downlink control information in a common search space in the Scell.

The UE only detects a DCI format 1A or DCI format 1C in the common search space on the Scell to receive a Message N transmitted by the base station. And then, the UE detects downlink control information in a specific search space within another subframe.

Correspondingly, the UE should decode the PDCCH and all related PDSCHs according to the corresponding combination defined in Table 2 when the UE is configured by a high layer to decode the PDCCH through the CRC scrambled with a RA-RNTI.

Method 2: The UE detects the downlink control information in the Pcell according to a configured RA-RNTI configured for each serving cell, wherein the RA-RNTI configured for each serving cell is different from one another; or
the UE detects the downlink control information in the Pcell according to a RA-RNTI configured for each serving cell, wherein the RA-RNTI configured for each serving cell is same; or
the UE detects the downlink control information in the Pcell according to a configured C-RNTI; or
the UE detects the downlink control information including a CIF on the Pcell according to a RA-RNTI configured for each serving cell, wherein the RA-RNTI configured for each serving cell is same.

Specifically:
the UE detects, in the Pcell, the downlink control information in a common search space within one subframe; or
the UE detects, in both the Pcell and the Scell, the downlink control information in a common search space within one subframe.

After the downlink control information is detected by the UE in the Pcell or the Scell, the UE detects the random access procedure message (i.e., Message N) according to the downlink control information and the preamble index corresponding to the transmitted PRACH; or
the UE detects the random access procedure message according to the downlink control information, the preamble index corresponding to the transmitted PRACH and a temporary C-RNTI, wherein the temporary C-RNTI is configured as a C-RNTI; or
the UE detects the random access procedure message according to the downlink control information, the preamble index corresponding to the transmitted PRACH and the configured C-RNTI.

### Embodiment 3

In a CA scenario, a base station transmits a random access trigger message to a UE in an Scell through high layer signaling or downlink control channel information to trigger a random access process, wherein the high layer signaling or the downlink control channel information includes an index of an uplink serving cell in which the PRACH is located.

The random access trigger message is also referred to as random access procedure message 0.

The random access process is triggered as follows:
the UE detects, in the Scell, the downlink control channel information transmitted by the base station to trigger the random access process. The downlink control information that the base station transmits to the UE is detected by the UE in the Scell. The downlink control information is born in a DCI format 1A; and when the DCI format 1A is used for a random access process and is initialized in a PDCCH order, the base station will transmit a Preamble Index and a PRACH Mask Index to the UE in the DCI format 1A.

The UE acquires a random access trigger message through the downlink control information included in the DCI format 1A detected in the Scell, and the UE transmits in an uplink serving cell indicated by SIB X of the downlink Scell in which the random access trigger message is received, the PRACH. X has preferably the value of 2.

The PRACH is also referred to as a physical random access message 1.

After the UE transmits the PRACH, the base station transmits a random access procedure message to the UE through high layer signaling or downlink control channel information, wherein the random access procedure message is referred to as a message N (Message N), where N is a positive integer, and is preferably 2, 4 or 5.

The UE detects, in the Pcell, the downlink control channel information that the base station transmits to the UE, wherein the downlink control channel information is used for indicating the Message N. The specific detection process can adopt the following methods:
Method 1: One RA-RNTI is configured for each serving cell; and in the Pcell, the UE should decode the PDCCH and all related PDSCHs according to the corresponding combination defined in Table 2 when the UE is configured by a high layer to decode the PDCCH through the CRC scrambled with the RA-RNTI.
   The UE detects the Message N according to the configured RA-RNTI and the preamble index corresponding to the transmitted PRACH configured for each serving cell, wherein the RA-RNTI configured for each serving cell is different from one another.
Method 2: The UE should decode the PDCCH and all the related PDSCHs according to the corresponding combination defined in Table 2 in the Pcell according to the configured RA-RNTI when the UE is configured by a high layer to decode the PDCCH through the CRC scrambled with the RA-RNTI. Here, the RA-RNTI configured for each serving cell is same.
Method 3: The UE detects the downlink control information according to the configured C-RNTI rather than a RA-RNTI.

After the downlink control information is detected by the UE in the Pcell, the UE detects the random access procedure message (i.e., Message N) according to the downlink control information and the preamble index corresponding to the transmitted PRACH; or
the UE detects the random access procedure message according to the downlink control information, the preamble index corresponding to the transmitted PRACH and a temporary C-RNTI, wherein the temporary C-RNTI is configured as a C-RNTI; or
the UE detects the random access procedure message according to the downlink control information, the preamble index corresponding to the transmitted PRACH and the configured C-RNTI.

### Embodiment 4

In a CA scenario, a base station transmits a random access trigger message to a UE in an Scell through high layer signaling or downlink control channel information to trigger a random access process, wherein the high layer signaling or the downlink control channel information includes an index of an uplink serving cell in which the PRACH is located.

The random access trigger message is also referred to as a random access procedure message 0.

The random access process is triggered as follows:
the UE detects, in the Scell, the downlink control channel information transmitted by the base station to trigger the random access process. The downlink control information that the base station transmits to the UE is detected by the UE in the Scell. The downlink control information is born in a DCI format 1A; and when the DCI format 1A is used for a random access process and is initialized in a PDCCH order, the base station will transmit a Preamble Index and a PRACH Mask Index to the UE in the DCI format 1A.

The UE acquires a random access trigger message through the downlink control information included in the DCI format 1A detected in the Scell, and the UE transmits in an uplink serving cell indicated by SIB X of the downlink Scell in which the random access trigger message is received, the PRACH. X has preferably the value of 2.

The PRACH is also referred to as a physical random access message 1.

After the UE transmits the PRACH, the base station transmits a random access procedure message to the UE through high layer signaling or downlink control channel information. The random access procedure message is referred to as a message N (Message N), where N is a positive integer, and is preferably 2, 4 or 5. The Scell is a downlink serving cell corresponding to the uplink serving cell in which the random access channel is transmitted.

The UE detects, in the Scell, the downlink control channel information that the base station transmits to the UE, wherein the downlink control channel information is used for indicating the Message N. The specific detection process can adopt the following methods:
Method 1: The UE should decode the PDCCH and all related PDSCHs according to the corresponding combination defined in Table 2 on the Scell according to a configured RA-RNTI when being arranged by a high layer to decode the PDCCH through the CRC scrambled with the RA-RNTI. Here, the RA-RNTI configured for each serving cell is same. Specifically:
Configuration 1: Within a certain subframe, the UE detects, in the Scell, the downlink control information in both a common search space and a UE specific search space .

In the Scell, the UE detects a DCI format 1A or DCI format 1C in the common search space to receive a Message N transmitted by the base station, and detects the corresponding DCI format in the UE specific search space at the same time to receive scheduling information used for indicating other downlink data.

Correspondingly, the UE should decode the PDCCH and all the related PDSCHs according to the corresponding combination defined in Table 2 when the UE is configured by a high layer to decode the PDCCH through the CRC scrambled with a RA-RNTI. Meanwhile, the UE will decode the PDCCH and all related PDSCHs according to the corresponding combination defined in Table 3 when the UE is also configured by a high layer to decode the PDCCH through the CRC scrambled with a C-RNTI.

Configuration 2: Within a certain subframe, the UE only detects downlink control information in a common search space in the Scell.

The UE only detects a DCI format 1A or DCI format 1C in the common search space in the Scell to receive a Message N transmitted by the base station. And then, the UE detects downlink control information in a specific search space within another subframe.

Correspondingly, the UE should decode the PDCCH and all the related PDSCHs according to the corresponding combination defined in Table 2 when the UE is configured by a high layer to decode the PDCCH through the CRC scrambled with a RA-RNTI.

Method 2: The UE detects the downlink control information in the Pcell according to a configured RA-RNTI configured for each serving cell, wherein the RA-RNTI configured for each serving cell is different from one another; or
the UE detects the downlink control information in the Pcell according to a RA-RNTI configured for each serving cell, wherein the RA-RNTI configured for each serving cell is same; or
the UE detects the downlink control information in the Pcell according to a configured C-RNTI; or
the UE detects the downlink control information including a CIF in the Pcell according to a RA-RNTI configured for each serving cell, wherein the RA-RNTI configured for each serving cell is same.

Specifically:
the UE detects, in the Pcell, the downlink control information in a common search space within one subframe; or
the UE detects, in both the Pcell and the Scell, the downlink control information in a common search space within one subframe.

After the downlink control information is detected by the UE in the Pcell or the Scell, the UE detects the random access procedure message (i.e., Message N) according to the downlink control information and the preamble index corresponding to the transmitted PRACH; or
the UE detects the random access procedure message according to the downlink control information, the preamble index corresponding to the transmitted PRACH and a temporary C-RNTI, wherein the temporary C-RNTI is configured as a C-RNTI; or
the UE detects the random access procedure message according to the downlink control information, the preamble index corresponding to the transmitted PRACH and the configured C-RNTI.

### Embodiment 5

In a CA scenario, a PRACH is transmitted in an Scell, and a UE feeds back and transmits a message M (Message M) to a base station in a serving cell X, wherein the message M is taken as a feedback of a Message N. M is a positive integer, preferably 3. The UE can transmit the Message M in the serving cell X by the following methods:
Method 1: The UE transmits the Message M in a Pcell.
Method 2: The UE transmits, in a serving cell in which the PRACH is transmitted, the Message M.

Corresponding to the method for transmitting a PRACH, the disclosure further provides a system for transmitting a PRACH, which includes a base station and a UE.

The base station is configured to transmit, in a Pcell or an Scell, a random access trigger message to the UE in a CA scenario;
the UE is configured to transmit, in the Scell, a PRACH; and
the base station is further configured to transmit, in the Pcell or an Scell, a random access procedure message to the UE.

Preferably, the base station is further configured to transmit the random access trigger message to the UE through high layer signaling or downlink control channel information of the Pcell, wherein the high layer signaling or the downlink control channel information includes an index of an uplink serving cell in which the PRACH is located.

The index of the uplink serving cell in which the PRACH is located may be located in
a CIF added in the downlink control channel information; or
downlink control signaling in the downlink control channel information.

The downlink control channel information may further include: a preamble index and a PRACH mask index.

Preferably, the UE is further configured to transmit, in a serving cell indicated by the index of the uplink serving cell in which the PRACH is located, the PRACH.

The base station is further configured to transmit the random access trigger message to the UE through the downlink control channel information of the Scell.

The UE is further configured to transmit, in an uplink serving cell indicated by SIB X of the downlink Scell in which the random access trigger message is received, the PRACH. X has preferably the value of 2.

The UE is further configured to: detect, in the Pcell, the downlink control information transmitted by the base station; and
detect the random access procedure message according to the downlink control information and the preamble index corresponding to the transmitted PRACH; or detect the random access procedure message according to the downlink control information, the preamble index corresponding to the transmitted PRACH and a temporary C-RNTI, wherein the temporary C-RNTI is configured as a C-RNTI; or detect the random access procedure message according to the downlink control information, the preamble index corresponding to the transmitted PRACH and a configured C-RNTI.

The UE is further configured to: detect the downlink control information according to a configured RA-RNTI configured for each serving cell, wherein the RA-RNTI configured for each serving cell is different from one another; or detect the downlink control information according to a RA-RNTI configured for each serving cell, wherein the RA-RNTI configured for each serving cell is same; or detect the downlink control information according to the configured C-RNTI.

Preferably, the Scell in which the base station transmits the random access procedure message may be a downlink serving cell corresponding to an uplink serving cell in which a random access channel is transmitted.

The UE is further configured to: detect the downlink control information transmitted by the base station; and
detect, in the Scell, the random access procedure message according to the downlink control information and the preamble index corresponding to the transmitted PRACH; or
detect, in the Scell, the random access procedure message according to the downlink control information, the preamble index corresponding to the transmitted PRACH and a temporary C-RNTI, wherein the temporary C-RNTI is configured as a C-RNTI; or
detect, in the Scell, the random access procedure message according to the downlink control information, the preamble index corresponding to the transmitted PRACH and a configured C-RNTI.

The UE is further configured to: detect, in the Scell, the downlink control information transmitted by the base station according to a configured RA-RNTI; or
detect, in the Pcell, the downlink control information according to a configured RA-RNTI configured for each serving cell, wherein the RA-RNTI configured for each serving cell is different from one another; or
detect, in the Pcell, the downlink control information according to a RA-RNTI configured for each serving cell, wherein the RA-RNTI configured for each serving cell is same; or
detect, in the Pcell, the downlink control information according to the configured C-RNTI; or
detect, in the Pcell, the downlink control information including a CIF according to a RA-RNTI configured for each serving cell, wherein the RA-RNTI configured for each serving cell is same.

The UE is further configured to: detect, in the Scell, the downlink control information in both a common search space and a UE specific search space within one subframe; or
only detect, in the Scell, the downlink control information in a common search space within one subframe and only detect, in the Scell, the downlink control information in a specific search space within another subframe.

The UE is further configured to: detect, in the Pcell, the downlink control information in a common search space within one subframe; or
detect, in both the Pcell and the Scell, the downlink control information in a common search space within one subframe.

The UE is further configured to transmit, in the Pcell or the Scell, a random access procedure message 3 to the base station after the base station transmits the random access procedure message to the UE. Specifically, the random access procedure message 3 can be transmitted to the base station in the Scell in which the PRACH is transmitted.

The above are only preferred embodiments of the disclosure, which are not intended to limit the scope of protection of the claims of the disclosure.

## Claims

1. A method for transmitting a Physical Random Access Channel PRACH, the method comprising:
in a Carrier Aggregation CA scenario, transmitting in a Primary Serving Cell Pcell or a Secondary Serving Cell Scell, by a base station, a random access trigger message to a User Equipment UE (401);
transmitting in the Scell, by the UE, a PRACH (402);
transmitting in the Pcell or the Scell, by the base station, a random access procedure message 2 to the UE (403); and
when the base station transmits, in the Pcell, the random access procedure message 2 to the UE, detecting, in both the Pcell and the Scell, by the UE, downlink control information in a common search space within one subframe; or
when the base station transmits, in the Scell, the random access procedure message 2 to the UE, detecting in both the Pcell and the Scell, by the UE, downlink control information in a common search space within one subframe;
wherein the transmitting in a Pcell, by a base station, a random access trigger message to a UE comprises:
transmitting, by the base station, the random access trigger message to the UE through downlink control channel information of the Pcell, wherein the downlink control channel information comprises an index of an uplink serving cell in which the PRACH is located.

2. The method according to claim1, wherein the index of the uplink serving cell in which the PRACH is located is located in:
a Carrier Indicator Field CIF added in the downlink control channel information; or
downlink control signaling in the downlink control channel information.

3. The method according to claim 1, wherein the transmitting in the Scell, by the UE, a PRACH comprises:
transmitting in a serving cell indicated by the index of the uplink serving cell in which the PRACH is located, by the UE, the PRACH.

4. The method according to claim 1, wherein the transmitting in an Scell, by a base station, a random access trigger message to a UE comprises:
transmitting, by the base station, the random access trigger message to the UE through downlink control channel information of the Scell.

5. The method according to claim 4, wherein the transmitting in the Scell, by the UE, a PRACH comprises:
transmitting in an uplink serving cell indicated by System Information Block X of the downlink Scell in which the random access trigger message is received, by the UE, the PRACH.

6. The method according to claim 1, further comprising: after the base station transmits, in the Pcell or the Scell, the random access procedure message 2 to the UE;
transmitting in the Scell in which the PRACH is transmitted, by the UE, the random access procedure message 3 to the base station;
wherein the random access procedure message 3 is a feedback message of the random access procedure message 2.

7. A system for transmitting a Physical Random Access Channel PRACH, comprising a base station and a User Equipment UE, wherein
the base station is configured to transmit, in a Primary Serving Cell Pcell or a Secondary Serving Cell Scell, a random access trigger message to the UE in a CA scenario;
the UE is configured to transmit, in the Scell, a PRACH; and
the base station is further configured to transmit, in the Pcell or the Scell, a random access procedure message 2 to the UE; and
when the base station is configured to transmit, in the Pcell, the random access procedure message 2 to the UE, the UE is further configured to: detect, in both the Pcell and the Scell, downlink control information in a common search space within one subframe; or
when the base station is configured to transmit, in the Scell, the random access procedure message 2 to the UE, the UE is further configured to: detect, in both the Pcell and the Scell, downlink control information in a common search space within one subframe;
wherein the base station is further configured to transmit the random access trigger message to the UE through downlink control channel information of the Pcell, wherein the downlink control channel information comprises an index of an uplink serving cell in which the PRACH is located.

8. The system according to claim 7, wherein the index of the uplink serving cell in which the PRACH is located is located in:
a Carrier Indicator Field CIF added in the downlink control channel information; or
downlink control signaling in the downlink control channel information.

9. The system according to claim 7, wherein the UE is further configured to transmit, in a serving cell indicated by the index of the uplink serving cell in which the PRACH is located, the PRACH.

10. The system according to claim 7, wherein the base station is further configured to transmit the random access trigger message to the UE through the downlink control channel information of the Scell.

11. The system according to claim 10, wherein the UE is further configured to transmit in an uplink serving cell indicated by System Information Block X of the downlink Scell in which the random access trigger message is received, the PRACH.

12. The system according to claim 7, wherein the UE is further configured to transmit, in the Scell in which the PRACH is transmitted, the random access procedure message 3 to the base station;
wherein the random access procedure message 3 is a feedback message of the random access procedure message 2.

## Patentansprüche

1. Verfahren zur Übertragung eines PRACH-Kanals (Physical Random Access Channel), wobei das Verfahren umfasst:
in einem CA-Szenario (Carrier Aggregation), Übertragen einer Auslösungsnachricht für den wahlfreien Zugriff (random access trigger message) in einer primären Serving Cell Pcell oder einer sekundären Serving Scell an ein Benutzergerät (401) durch eine Basisstation,
Übertragen eines PRACH durch das UE in der Scell (402);
Übertragen einer den wahlfreien Zugriff betreffenden Prozedurnachricht 2 in der Pcell oder der Scell an das UE (403) durch die Basisstation und
Erkennen von Downlink-Steuerungsdaten in einem gemeinsamen Suchraum innerhalb eines Subframes sowohl in der Pcell als auch in der Scell durch das UE, wenn die Basisstation in der Pcell die den wahlfreien Zugriff betreffenden Prozedurnachricht 2 sendet, oder
Erkennen von Downlink-Steuerungsdaten in einem gemeinsamen Suchraum innerhalb eines Subframes sowohl in der Pcell als auch in der Scell durch das UE, wenn die Basisstation in der Scell die den wahlfreien Zugriff betreffenden Prozedurnachricht 2 an das UE sendet,
wobei das Übertragen einer den wahlfreien Zugriff betreffenden Auslösernachricht für den wahlfreien Zugriff in einer Pcell durch eine Basistation umfasst:
Übertragen der Auslösernachricht für den wahlfreien Zugriff an das UE durch die Basisstation über Downlink-Steuerkanaldaten (Downlink Control Channel Information) der Pcell, wobei die Downlink-Steuerkanaldaten einen Index einer Uplink Serving Cell, in der sich der PRACH befindet, umfassen.

2. Verfahren nach Anspruch 1, wobei der Index der Uplink Serving Cell, in der sich der PRACH befindet, sich befindet in
einem den Downlink-Steuerkanaldaten hinzugefügten CIF (Carrier Indicator Field) oder
einer Downlink-Steuersignalisierung in den Downlink-Steuerkanaldaten.

3. Verfahren nach Anspruch 1, wobei das Senden eines PRACH in der Scell durch das UE umfasst:
Übertragen des PRACH in einer vom Index der Uplink Serving Cell, in der sich der PRACH befindet, angegebenen Serving Cell.

4. Verfahren nach Anspruch 1, wobei das Übertragen einer den wahlfreien Zugriff betreffenden Auslösernachricht für den wahlfreien Zugriff in einer Scell an das UE umfasst:
Übertragen der Auslösernachricht für den wahlfreien Zugriff an das UE über Downlink-Steuerkanaldaten der Scell durch die Basisstation.

5. Verfahren nach Anspruch 4, wobei das Senden eines PRACH in der Scell durch das UE umfasst:
Übertragen des PRACH in einer vom Systemdatenblock X der Downlink-Scell, in der die Auslösernachricht für den wahlfreien Zugriff empfangen wird, angegebenen Uplink Serving Cell durch das UE.

6. Verfahren nach Anspruch 1, ferner umfassend: nachdem die Basisstation die den wahlfreien Zugriff betreffenden Prozedurnachricht 2 in der Pcell oder der Scell an das UE sendet,
Übertragen der den wahlfreien Zugriff betreffenden Prozedurnachricht 3 an die Basisstation in der Scell, in der der PRACH vom UE übertragen wird,
wobei die den wahlfreien Zugriff betreffenden Prozedurnachricht 3 eine Rückmeldung der den wahlfreien Zugriff betreffenden Prozedurnachricht 2 ist.

7. System zur Übertragung eines PRACH, umfassend eine Basisstation und ein UE, wobei
die Basisstation zur Übertragung einer den wahlfreien Zugriff betreffenden Auslösernachricht in einer Pcell oder einer Scell an das UE in einem CA-Szenario, konfiguriert ist
das UE zur Übertragung eines PRACH in der Scell konfiguriert ist und
die Basisstation ferner zur Übertragung einer den wahlfreien Zugriff betreffenden Prozedurnachricht 2 in der Pcell oder der Scell an das UE konfiguriert ist,
das UE ferner zur Ausführung folgender Funktion konfiguriert ist, wenn die Basisstation zur Übertragung der den wahlfreien Zugriff betreffenden Prozedurnachricht 2 in der Pcell an das UE konfiguriert ist: Erkennen von Downlink-Steuerungsdaten in einem gemeinsamen Suchraum innerhalb eines Subframes sowohl in der Pcell als auch in der Scell oder
das UE ferner zur Ausführung folgender Funktion konfiguriert ist, wenn die Basisstation zur Übertragung der den wahlfreien Zugriff betreffenden Prozedurnachricht 2 in der Scell an das UE konfiguriert ist: Erkennen von Downlink-Steuerungsdaten in einem gemeinsamen Suchraum innerhalb eines Subframes sowohl in der Pcell als auch in der Scell,
wobei die Basisstation ferner zum Übertragen der Auslösernachricht für den wahlfreien Zugriff an das UE über Downlink-Steuerkanaldaten der Pcell konfiguriert ist, wobei die Downlink-Steuerkanaldaten einen Index einer Uplink Serving Cell, in der sich der PRACH befindet, umfassen.

8. System nach Anspruch 7, wobei der Index der Uplink Serving Cell, in der sich der PRACH befindet, sich befindet in
einem den Downlink-Steuerkanaldaten hinzugefügten CIF oder
einer Downlink-Steuersignalisierung in den Downlink-Steuerkanaldaten.

9. System nach Anspruch 7, wobei das UE ferner zum Übertragen des PRACH in einer vom Index der Uplink Serving Cell, in der sich der PRACH befindet, angegebenen Serving Cell konfiguriert ist.

10. System nach Anspruch 7, wobei die Basisstation ferner zum Übertragen der Auslösernachricht für den wahlfreien Zugriff an das UE über die Downlink-Steuerkanaldaten der Scell konfiguriert ist.

11. System nach Anspruch 10,wobei das UE ferner zum Übertragen des PRACH in einer vom Systemdatenblock X der Downlink-Scell, in der die Auslösernachricht für den wahlfreien Zugriff empfangen wird, angegebenen Uplink Serving Cell konfiguriert ist.

12. System nach Anspruch 7, wobei das UE ferner zum Übertragen der den wahlfreien Zugriff betreffenden den wahlfreien Zugriff betreffenden Prozedurnachricht 3 an die Basisstation in der Scell, in der der PRACH übertragen wird, konfiguriert ist
wobei die den wahlfreien Zugriff betreffenden Prozedurnachricht 3 eine Rückmeldung der den wahlfreien Zugriff betreffenden Prozedurnachricht 2 ist.

## Revendications

1. Procédé de transmission d'un canal physique d'accès aléatoire, PRACH, le procédé comprenant les étapes ci-dessous consistant à :
dans un scénario d'agrégation de porteuses, CA, transmettre dans une cellule de desserte primaire, « Pcell », ou dans une cellule de desserte secondaire, « Scell », par le biais d'une station de base, un message de déclenchement d'accès aléatoire, à un équipement d'utilisateur, UE (401) ;
transmettre, dans la cellule Scell, par le biais de l'équipement UE, un canal PRACH (402) ;
transmettre, dans la cellule Pcell ou dans la cellule Scell, par le biais de la station de base, un message de procédure d'accès aléatoire « 2 », à l'équipement UE (403) ; et
lorsque la station de base transmet, dans la cellule Pcell, le message de procédure d'accès aléatoire « 2 », à l'équipement UE, détecter, à la fois dans la cellule Pcell et dans la cellule Scell, par le biais de l'équipement UE, des informations de commande de liaison descendante dans un espace de recherche commun au sein d'une sous-trame ; ou
lorsque la station de base transmet, dans la cellule Scell, le message de procédure d'accès aléatoire « 2 », à l'équipement UE, détecter, à la fois dans la cellule Pcell et dans la cellule Scell, par le biais de l'équipement UE, des informations de commande de liaison descendante dans un espace de recherche commun au sein d'une sous-trame ;
dans lequel l'étape de transmission, dans une cellule Pcell, par le biais d'une station de base, d'un message de déclenchement d'accès aléatoire, à un équipement UE, comprend :
transmettre, par le biais de la station de base, le message de déclenchement d'accès aléatoire, à l'équipement UE, par le biais d'informations de canal de commande de liaison descendante de la cellule Pcell, dans lequel les informations de canal de commande de liaison descendante comprennent un index d'une cellule de desserte de liaison montante dans laquelle se situe le canal PRACH.

2. Procédé selon la revendication 1, dans lequel l'index de la cellule de desserte de liaison montante dans laquelle se situe le canal PRACH est situé dans :
un champ d'indicateur de porteuse, CIF, ajouté dans les informations de canal de commande de liaison descendante ; ou
une signalisation de commande de liaison descendante dans les informations de canal de commande de liaison descendante.

3. Procédé selon la revendication 1, dans lequel l'étape de transmission, dans la cellule Scell, par le biais de l'équipement UE, d'un canal PRACH, consiste à :
transmettre, dans une cellule de desserte indiquée par l'index de la cellule de desserte de liaison montante dans laquelle le canal PRACH est situé, par le biais de l'équipement UE, le canal PRACH.

4. Procédé selon la revendication 1, dans lequel l'étape de transmission, dans une cellule Scell, par le biais d'une station de base, d'un message de déclenchement d'accès aléatoire, à un équipement UE, consiste à :
transmettre, par le biais de la station de base, le message de déclenchement d'accès aléatoire, à l'équipement UE, à travers des informations de canal de commande de liaison descendante de la cellule Scell.

5. Procédé selon la revendication 4, dans lequel l'étape de transmission, dans la cellule Scell, par le biais de l'équipement UE, d'un canal PRACH, consiste à :
transmettre, dans une cellule de desserte de liaison montante indiquée par le bloc d'informations système « X » de la cellule Scell de liaison descendante dans laquelle le message de déclenchement d'accès aléatoire est reçu, par le biais de l'équipement UE, le canal PRACH.

6. Procédé selon la revendication 1, comprenant en outre l'étape ci-dessous consistant à : après que la station de base a transmis, dans la cellule Pcell ou dans la cellule Scell, le message de procédure d'accès aléatoire « 2 », à l'équipement UE :
transmettre, dans la cellule Scell dans laquelle le canal PRACH est transmis, par le biais de l'équipement UE, le message de procédure d'accès aléatoire « 3 » à la station de base ;
dans lequel le message de procédure d'accès aléatoire « 3 » est un message de rétroaction du message de procédure d'accès aléatoire « 2 ».

7. Système destiné à transmettre un canal physique d'accès aléatoire, PRACH, comprenant une station de base et un équipement d'utilisateur, UE, dans lequel :
la station de base est configurée de manière à transmettre, dans une cellule de desserte primaire, « PCell », ou une cellule de desserte secondaire, « SCell », un message de déclenchement d'accès aléatoire, à l'équipement UE, dans un scénario d'agrégation CA;
l'équipement UE est configuré de manière à transmettre, dans la cellule Scell, un canal PRACH ; et
la station de base est en outre configurée de manière à transmettre, dans la cellule Pcell ou dans la cellule Scell, un message de procédure d'accès aléatoire « 2 », à l'équipement UE ; et
lorsque la station de base est configurée de manière à transmettre, dans la cellule Pcell, le message de procédure d'accès aléatoire « 2 », à l'équipement UE, l'équipement UE est en outre configuré de manière à : détecter, à la fois dans la cellule Pcell et dans la cellule Scell, des informations de commande de liaison descendante dans un espace de recherche commun au sein d'une sous-trame ; ou
lorsque la station de base est configurée de manière à transmettre, dans la cellule Scell, le message de procédure d'accès aléatoire « 2 », à l'équipement UE, l'équipement UE est en outre configuré de manière à : détecter, à la fois dans la cellule Pcell et dans la cellule Scell, des informations de commande de liaison descendante dans un espace de recherche commun au sein d'une sous-trame ;
dans lequel la station de base est en outre configurée de manière à transmettre le message de déclenchement d'accès aléatoire, à l'équipement UE, à travers des informations de canal de commande de liaison descendante de la cellule Pcell, dans laquelle les informations de canal de commande de liaison descendante comprennent un index d'une cellule de desserte de liaison montante dans laquelle le canal PRACH est situé.

8. Système selon la revendication 7, dans lequel l'index de la cellule de desserte de liaison montante dans laquelle le canal PRACH est situé est situé dans :
un champ d'indicateur de porteuse, CIF, ajouté dans les informations de canal de commande de liaison descendante ; ou
une signalisation de commande de liaison descendante dans les informations de canal de commande de liaison descendante.

9. Système selon la revendication 7, dans lequel l'équipement UE est en outre configuré de manière à transmettre, dans une cellule de desserte indiquée par l'index de la cellule de desserte de liaison montante dans laquelle le canal PRACH est situé, le canal PRACH.

10. Système selon la revendication 7, dans lequel la station de base est en outre configurée de manière à transmettre le message de déclenchement d'accès aléatoire, à l'équipement UE, à travers des informations de canal de commande de liaison descendante de la cellule Scell.

11. Système selon la revendication 10, dans lequel l'équipement UE est en outre configuré de manière à transmettre, dans une cellule de desserte de liaison montante indiquée par un bloc d'informations système « X » de la cellule de liaison descendante dans laquelle le message de déclenchement d'accès aléatoire est reçu, le canal PRACH.

12. Système selon la revendication 7, dans lequel l'équipement UE est en outre configuré de manière à transmettre, dans la cellule Scell dans laquelle le canal PRACH est transmis, le message de procédure d'accès aléatoire « 3 », à la station de base ;
dans lequel le message de procédure d'accès aléatoire « 3 » est un message de rétroaction du message de procédure d'accès aléatoire « 2 ».
